(19) Europäisches Patentamt
European Patent Office
Office européen des brevets

(11) **EP 2 785 134 B1**

(12) **EUROPEAN PATENT SPECIFICATION**

(45) Date of publication and mention
of the grant of the patent:
**18.05.2016 Bulletin 2016/20**

(51) Int Cl.:
***H04W 74/08*** (2009.01)

(21) Application number: **13305368.6**

(22) Date of filing: **26.03.2013**

(54) **Method and system for wlan collision detection**

Verfahren und System zur WLAN-Kollisionsdetektion

Procédé et système de détection de collision wlan

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.10.2014 Bulletin 2014/40**

(73) Proprietor: **ALCATEL LUCENT
92100 Boulogne-Billancourt (FR)**

(72) Inventors:
• **Marce, Olivier
91620 NOZAY (FR)**
• **Taburet, François
91620 NOZAY (FR)**

(74) Representative: **Berthier, Karine
Alcatel-Lucent International
148/152, route de la Reine
92100 Boulogne-Billancourt (FR)**

(56) References cited:
**EP-A1- 1 509 006      EP-A2- 1 519 518
US-A1- 2007 211 751      US-A1- 2012 147 822**

**Description**

FIELD OF THE INVENTION

The present invention relates to the technical field of communications in Wireless Local Area Networks (WLAN).

BACKGROUND OF THE INVENTION

Developed in different standards and versions, WLANs or its popular instancing Wi-Fi, are now fully integrated in the communication landscape and are widely deployed across different environments including business, public and residential environments.

When a plurality of mobile devices simultaneously needs to communicate with a WLAN AP (Access Point), they share the same channel without coordinating with one another, and consequently the occurrences of collisions at the WLAN AP become unfortunately inevitable.

Collisions between the mobile devices reduce the global throughput of the WLAN AP and waste radio resources (as collided packets are expected to be retransmitted).

In this regard, a Distributed Coordination Function (DCF) is proposed in 802.11 standards so as to manage the collision at the AP level.

Nevertheless, such function does not enable the WLAN AP to identify which devices collide with each other in order to perform the appropriate actions toward colliding devices.

Instead, collusion occurrences may be detected and notified to mobile stations over a second listening interface called Carrier Sense Multiple Access with Collision Notification (CSMA/CA). However, such method supposes the presence of an ongoing established communication between the WLAN AP and the emitting mobile station.

One object of the present invention is, therefore, to enable a WLAN AP to precisely identify mobile devices those cause collisions and to take appropriate actions with regard to colliding ones while involving the least waste of radio resources.

Another object of the present invention is to identify which devices are colliding the most in a WLAN, and to permit the AP to decide to evict them from WLAN if needed.

Another object of the present invention is to detect as soon as possible colliding mobile devices in order to make them switch back to macro cellular networks, if possible.

Another object of the present invention is to provide a successful and efficient Wi-Fi offloading.

Another object of the present invention is to provide a better Quality of Service (QoS) to end-users.

Another object of the present invention is to promote the use of WLAN as a companion technology to cellular networks and to offload data to WLAN with good QoS.

EP 1509006 A1 discloses a method and apparatus that may enable and/or disable of a packet protection mechanism based on a value of an adaptable threshold. The value of the adaptable threshold may be determined from a collision rate of packets transmitted over a wireless local area network and from detection of hidden nodes.

SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for detecting a first mobile station causing collision at an access point of a wireless local area network with a second mobile station during communication between said access point and said first and second mobile station, said method comprising the following steps:

- identifying said first mobile station based on a packet received therefrom;
- computing a first time window in which a packet failed to be transmitted from the first mobile station to the said access point;
- identifying said second mobile station based on a packet received therefrom;
- computing a second time window in which a packet failed to be transmitted from the second mobile station to the said access point, or in which a packet has successfully transmitted from said second mobile station to the said access point;
- if the first and second time windows overlap, computing a probability of collision between the first and second mobile stations;

- identifying the colliding mobile station based on the computed probability of collision.

Various embodiments further relate to an access point of a wireless local area network configured for detecting a first mobile station causing collision with a second mobile station during communication between said access point and said first and second mobile station, said access point comprising

- means for identifying said first mobile station based on a packet received therefrom;
- means for computing a first time window in which a packet failed to be transmitted from the first mobile station to the said access point;
- means for identifying said second mobile station based on a packet received therefrom;
- means for computing a second time window in which a packet failed to be transmitted from the second mobile station to the said access point, or in which a packet has successfully transmitted from said second mobile station to the said access point;
- if the first and second time windows overlap, means for computing a probability of collision between the first and second mobile stations;
- means for identifying the colliding mobile station based on the computed probability of collision.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawing in which

- FIG.1 is a schematic diagram illustrating functional modules for WLAN collision detection according to various embodiment;
- FiG.2 and FIG.3 are schematic diagrams illustrating time windows used for computing the probability of collision.

DETAILED DESCRIPTION OF ILLUSTRATIVE EMBODIMENTS

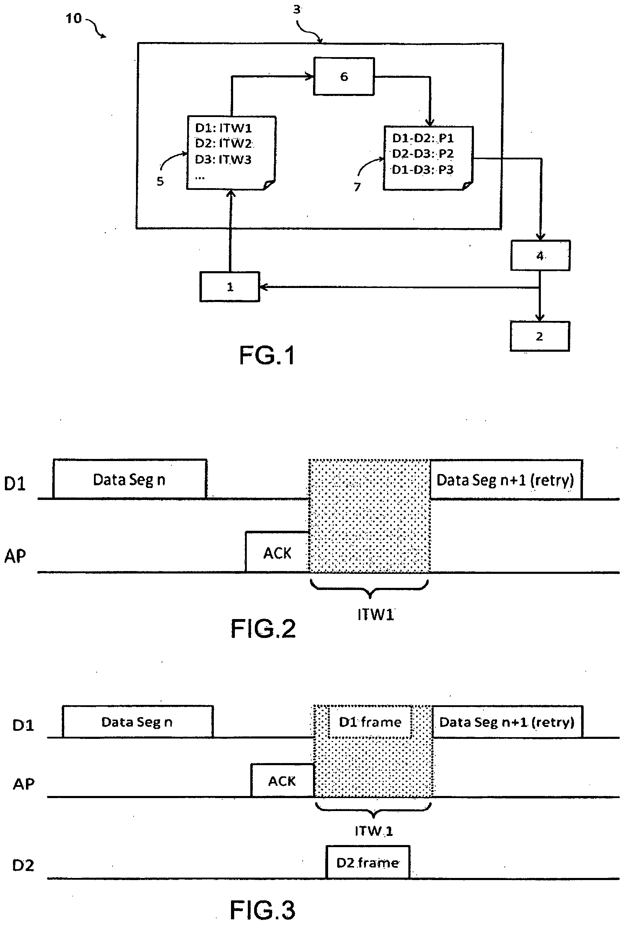

With reference to figure 1, there is shown a WLAN AP **10** comprising a WLAN interface **1** that manages the WLAN protocols (such as 802.11a/b/g/n WiFi standards or femtocell protocols) and optionally a WLAN/3G offloading control module **2**. Such WLAN AP **10** may be any access nodes for residential or business local area and/or public or commercial hotspots connectivity.

The WLAN AP **10** further comprises

- a Colliding Device Detection Module (CDDM) **3** configured to compute the probability of collision between the different client devices known to the WLAN AP **10**;
- an Evicting Module (EM) **4** configured to decide on and perform the eviction of the detected colliding devices.

The CDDM **3** retrieves from the WLAN interface **1** the received packets. Subsequently, the CDDM **3** fills and updates an Initial. Transmission Window (ITW) table **5**. As illustrated in figure 2, an ITW refers to the time window between the time of the last acknowledgment (ACK) sent from the WLAN AP **10** plus the Distributed Inter-Frame Space (DIFS) of a packet with sequence number $n$ ("Data Seg n" in figures 2 and 3) and the start time of the received packet with sequence number $n+1$ and Retry Flag set to $1$ ("Data Seg n+1 (retry)" in figures 2 and 3).

It is to be noted that a packet that is transmitted is marked as, and by definition, has been transmitted at least once. Then, it is possible for the WLAN AP **10** to estimate the time Window when the initial transmission(s) have been sent (the time interval between the end of ACK plus DIFS of packet with previous sequence number, and the start of the retransmitted packet: the time window designated by ITW in figures 2 and 3).

The ITW table stores, for each device **D** seen by the AP **10** (i.e. each new MAC address identified in the received packets at the WLAN interface **1** level), the corresponding ITW. These ITWs may be stored in the following form "D1: ITW1, D2: ITW2, and so on as shown in figure 1, each ITW being in the form of a vector of two time values, namely [start, delay] (delay=end time of ITW - start time of ITW).

Then, once ITWs (ITW1, ITW2, ITW3, and so on) are computed for the different devices **D** (respectively, D1, D2, D3 and so on) identified by the AP **10** is established, it is possible to compare these entries and, when two time windows overlap, to compute a probability of collision between the corresponding devices.

The Probability Computation (PC) module **6** utilizes the content of the ITW table **5** to computes a probability for 2 devices **D1** and **D2** to have collided within their stored ITW, by comparing their respective ITWs in which a packet from the device **D1** failed to be transmitted (see figure 3). In other words, if **D2** transmitted within ITW1, there is a probability that it collided and overrided missing packet on **D1.** Accordingly, the probability for not colliding is given by

- the number of slots before **D2** packet such that **D1** packet can be transmitted without collision (i.e. start of **D2** packet minus start of ITW1 minus size of **D1** packet) plus number of slots after **D2** packet; divided by
- the size of ITW1 (delay in the ITW1 vector).

The probability of collision between **D1** and **D2 is** the probability of having a time slot, within ITW1, for transmitting a packet from **D1** to the AP **10** that overlaps with the time slot for transmitting a packet from **D2** to the AP **10**.

An illustrative example for computing and detecting the probabilities of collision is as follows:

T1: table of data on last received packet $\underline{P}$ for all Mobile Stations $\underline{S}$

T1[$\underline{S}$] = (

start: time slot of start of $\underline{P}$,

end: time slot of end of $\underline{P}$,

ack: time slot of end of ACK for $\underline{P}$)

T2: table of IWTs for all Mobile Stations $\underline{S}$, and transmission delay of retransmitted packet $\underline{P}$

T2[$\underline{S}$] = (start, end, delay)

PC: table of Collision $\underline{P}$robabilities between pair of Mobiles Stations $\underline{S1}$, $\underline{S2}$

$$PC[\underline{S1},\underline{S2}]=0$$

For each received packet $\underline{P}$

S: emitting Mobile Station $\underline{S}$ of Packet $\underline{P}$
t0: time slot of packet $\underline{P}$ emission start
t1: time slot of end of ACK for packet $\underline{P}$
d: transmission delay of packet $\underline{P}$ (i.e. size in bit/selected bandwidth) in time slots
If retry bit of packet $\underline{P}$ set to 1:

$$t=T1[\underline{S}].ack$$

$$IWT=(t,t0+d)$$

$$T2[\underline{S}]=(t,t0,d)$$

For each mobile station s such that s!=S:

if (T1[s].start, T1[s].end) overlaps with IWT then :

$$x = IWT.end - IWT.start$$

$$y = (\max(0, T1[s].start - IWT.start d) + \max(0, IWT.end - T1[s].ack - d))$$

end

if T2[s] overlaps with IWT then :

if IWT.start < T2[s].start then:

$$IWT1 = IWT$$

$$IWT2 = T2[s]$$

else :

$$IWT1 = T2[s]$$

$$IWT2 = IWT$$

$$x = (IWT1.end - IWT1.start - IWT1.d)(IWT2.end - IWT2.start - IWT2.d)$$

if IWT1.start+d > IWT2.start then :

$$y = \text{sum for } i=0 \text{ up to } (IWT1.end - IWT1.start - IWT1.d) \text{ of } ((IWT2.end - IWT2.d) - (IWT1.start - IWT1.d - i))$$

else :

$$y = (IWT2.start - IWT1.start - d)*(IWT2.end - IWT2.start - IWT2.d) + \text{sum for } i=0 \text{ up to } (IWT1.end - IWT2.start) \text{ of } (IWT2.end - IWT2.start - IWT2.d - i) [$$

end

$$PC[s,S]=1-y/x$$

end

$$T1[S]=(t0,t0+d,t1)$$

By collecting probabilities from a sufficiently large number of time windows ITWs, the AP **10** is able to compute a probability of collision between the devices (i.e. Mobile stations), then to determine the most colliding ones.

Accordingly, the WLAN AP **10** is configured to compute the probability of collision between different client devices, by comparing the time windows of these devices in which a packet failed to be transmitted.

The computed probability between two devices **D1** and **D2** is stored in a probability table **7.** Each time that a new probability p is computed for a pair of devices (D1, D2), the table 7 is updated, taking into account the value of p (e.g. Pi ←1-((1-p)(1-Pi))).

Once collision probabilities are computed, the AP **10** is able to evict the detected colliding devices, by either triggering a vertical handover toward the 3G network (i.e. moving back colliding devices to the 3G network), or by aborting the interaction with colliding devices by not acknowledging packets received therefrom.

The evicting module **4** takes as input the probability table **7** and, depending on predefined collusion probabilities thresholds, can decide to evict one or several devices. The predefined policies may be provided by the AP **10,** or retrieved through the network.

To evict a device **D**, the evicting module **4** interacts with the WLAN Interface **1,** and can enforce the eviction, for example, by driving the WLAN interface **1** to not acknowledge the packets received from this device **D**, or by sending a dedicated packet to this device **D**. The evicting module **4** may use signaling by communicating with the dedicated module.

In another embodiment, each packet which is retransmitted is provided with the delay from the previous transmission attempt (the backoff delay). Alternatively, the backoff delay may be transmitted periodically, after certain event or on request to the AP **10** through other means including, for example, inband or out of band, dedicated or not dedicated messages. With such extra information the WLAN AP **10** is able to identify which frames collided with each other, by computing precisely the slots when the lost packet should have been received, thus by computing a shorter time window which means that the probability computation is more accurate.

Accordingly, as soon as devices collide, the AP **10** reacts by sending information outside or by taking an action to evict the identified colliding devices.

Advantageously, the above-described method precisely identifies which devices are colliding with other devices, allowing a dedicated action for colliding devices.

Advantageously, the above described method optimizes Wi-Fi resources usage (no need for establishing a communication session for collision notification) for achieving a sufficient QoS and Wi-Fi offloading improving.

Further, advantageously, evicting colliding devices improves Wi-Fi performance, notably for cellular data offloading (solving congestion in LTE macro cellular networks), as if several mobile devices simultaneously request, the available resources drop and the throughput of each mobile device decreases dramatically.

In one embodiment, the WLAN AP **10** and devices are standardized so that support the above specifications and ensure interoperability. Alternatively, the requested information for collision probabilities computation is provided to the WLAN AP **10** through dedicated messages.

## Claims

1. A method for detecting a first mobile station (D1) causing collision at an access point (10) of a wireless local area network with a second mobile station (D2) during communication between said access point and said first and second mobile station, said method comprising the following steps:

   - identifying said first mobile station (D1) based on a packet received therefrom;
   - computing a first time window (ITW1) in which a packet failed to be transmitted from the first mobile station to the said access point;
   - identifying said second mobile station (D2) based on a packet received therefrom;
   - computing a second time window (ITW2) in which a packet failed to be transmitted from the second mobile station to the said access point, or in which a packet has successfully transmitted from said second mobile station to the said access point;

- if the first and second time windows overlap, computing a probability of collision between the first and second mobile stations;
- identifying the colliding mobile station based on the computed probability of collision.

2. The method of claim 1, wherein the first time window (ITW1) in which a packet failed to be transmitted is the time window between

- the time of the last acknowledgment (ACK) sent from the access point (10) to the first mobile station plus the Distributed Inter-Frame Space of a packet with a first sequence number; and
- the start time of a received packet by the access point (10) from the first mobile station and having a second sequence number succeeding the said first sequence number and a Retry Flag set to 1.

3. The method of claim 2, wherein the first time window (ITW1) is provided by the received packet by the access point (10) having a second sequence number succeeding the said first sequence number and a Retry Flag set to 1.

4. The method of claim 1 wherein the transmitted packet to the access point is provided with the delay from the previous transmission attempt, said backoff delay.

5. The method of claim 4 wherein the backoff delay is transmitted to the access point through an inband or out of band message.

6. The method of any of claims 2 to 5, wherein the probability of collision is the probability of having a time slot, within the first time window, for transmitting a packet from the first mobile station (D1) to the access point that overlaps with the time slot for transmitting a packet from the second mobile station to the access point (10).

7. The method of any of the preceding claims, wherein the colliding mobile station is evicted.

8. The method of claim 7, wherein the colliding mobile station is evicted by moving back colliding mobile station to the mobile communication network to which was connected.

9. The method of claim 7, wherein the colliding mobile station is evicted by not acknowledging packets received therefrom.

10. An access point (10) of a wireless local area network configured for detecting a first mobile station (D1) causing collision with a second mobile station (D2) during communication between said access point and said first and second mobile station, said access point comprising

- means for identifying said first mobile station (D1) based on a packet received therefrom;
- means for computing a first time window (ITW1) in which a packet failed to be transmitted from the first mobile station to the said access point;
- means for identifying said second mobile station (D2) based on a packet received therefrom;
- means for computing a second time window (ITW2) in which a packet failed to be transmitted from the second mobile station to the said access point, or in which a packet has successfully transmitted from said second mobile station to the said access point;
- if the first and second time windows overlap, means for computing a probability of collision between the first and second mobile stations;
- means for identifying the colliding mobile station based on the computed probability of collision.

11. The access point of claim 10, further comprising means for evicting the colliding mobile station.

12. Computer program implemented on a processing unit of a computer, said program including code sections for performing instructions corresponding to the steps of a method according to any of claims 1-9.

**Patentansprüche**

1. Verfahren für das Erkennen einer ersten Mobilstation (D1), die mit einer zweiten Mobilstation (D2) an einem Zugangspunkt (10) eines drahtlosen lokalen Netzwerks während der Kommunikation zwischen besagtem Zugangspunkt und besagter erster und einer zweiten Mobilstation eine Kollision verursacht, wobei das Verfahren die folgenden Schritte umfasst:

- Identifizieren besagter erster Mobilstation (D1) auf der Grundlage eines von dieser empfangenen Datenpakets;
- Berechnen eines ersten Zeitfensters (ITW1), in welchem die Übermittlung eines Datenpakets von der ersten Mobilstation zu besagtem Zugangspunkt fehlgeschlagen ist;
- Identifizieren besagter zweiter Mobilstation (D2) auf der Grundlage eines von dieser empfangenen Datenpakets;
- Berechnen eines zweiten Zeitfensters (ITW2), in welchem die Übermittlung eines Datenpakets von der zweiten Mobilstation zu besagtem Zugangspunkt fehlgeschlagen ist oder in welchem ein Datenpaket erfolgreich von besagter zweiter Mobilstation zu besagtem Zugangspunkt übermittelt wurde;
- bei einer Überlappung des ersten und des zweiten Zeitfensters das Berechnen der Wahrscheinlichkeit einer Kollision zwischen den ersten und den zweiten Mobilstationen;
- Identifizieren der kollidierenden Mobilstation auf der Grundlage der berechneten Kollisionswahrscheinlichkeit.

2. Verfahren nach Anspruch 1, wobei das erste Zeitfenster (ITW1), in welchem die Übermittlung eines Datenpakets fehlschlug, dasjenige Zeitfenster ist, das gelegen ist zwischen

- dem Zeitpunkt der letzten vom Zugangspunkt (10) an die erste Mobilstation gesendeten Bestätigung (ACK) zuzüglich des Distributed Inter-Frame Space eines Datenpakets mit einer ersten Sequenznummer, und
- der Startzeit eines beim Zugangspunkt (10) von der ersten Mobilstation empfangenen Datenpakets mit einer auf besagte erste Sequenznummer folgenden zweiten Sequenznummer und einem auf 1 gesetzten Retry-Flag.

3. Verfahren nach Anspruch 2, wobei das erste Zeitfenster (ITW1) von einem beim Zugangspunkt (10) empfangenen Datenpaket zur Verfügung gestellt wird, das eine zweite Sequenznummer hat, die auf besagte erste Sequenznummer folgt, und ein auf 1 gesetztes Retry-Flag.

4. Verfahren nach Anspruch 1, wobei das an den Zugangspunkt übermittelte Paket mit der Verzögerung aus dem vorangegangenen Übertragungsversuch zur Verfügung gestellt wird, Zurückstellungsverzögerung oder Backoff-Delay genannt.

5. Verfahren nach Anspruch 4, wobei die Zurückstellungsverzögerung über eine Inband- oder Out-of-Band-Nachricht an den Zugangspunkt übermittelt wird.

6. Verfahren nach einem beliebigen der Ansprüche 2 bis 5, wobei die Kollisionswahrscheinlichkeit die Wahrscheinlichkeit des Bestehens eines Zeitschlitzes innerhalb des ersten Zeitfensters für die Übermittlung eines Datenpakets von der ersten Mobilstation (D1) zum Zugangspunkt besteht, der sich mit dem Zeitschlitz für die Übermittlung eines Datenpakets von der zweiten Mobilstation zum Zugangspunkt (10) überlappt.

7. Verfahren nach einem beliebigen der vorstehenden Ansprüche, wobei die kollidierende Mobilstation freigemacht wird.

8. Verfahren nach Anspruch 7, wobei die kollidierende Mobilstation durch das zurückgeben der kollidierenden Mobilstation an das Kommunikationsnetzwerk freigemacht wird, mit dem sie verbunden war.

9. Verfahren nach Anspruch 7, wobei die kollidierende Mobilstation freigemacht wird, in dem von ihr erhaltene Datenpakete nicht bestätigt werden.

10. Zugangspunkt (10) eines drahtlosen lokalen Netzwerks, konfiguriert für das Erkennen einer ersten Mobilstation (D1), die mit einer zweiten Mobilstation (D2) während der Kommunikation zwischen besagtem Zugangspunkt und besagter ersten und besagter zweiten Mobilstation eine Kollision verursacht, wobei besagter Zugangspunkt umfasst:

- Mittel für das Identifizieren besagter erster Mobilstation (D1) auf der Grundlage eines von dieser empfangenen Datenpakets;
- Mittel für das Berechnen eines ersten Zeitfensters (ITW1), in welchem die Übermittlung eines Datenpakets von der ersten Mobilstation zu besagtem Zugangspunkt fehlgeschlagen ist;
- Mittel für das Identifizieren besagter zweiter Mobilstation (D2) auf der Grundlage eines von dieser empfangenen Datenpakets;

- Mittel für das Berechnen eines zweiten Zeitfensters (ITW2), in welchem die Übermittlung eines Datenpakets von der zweiten Mobilstation zu besagtem Zugangspunkt fehlgeschlagen ist oder in welchem ein Datenpaket erfolgreich von besagter zweiter Mobilstation zu besagtem Zugangspunkt übermittelt wurde;
- bei einer Überlappung des ersten und des zweiten Zeitfensters, Mittel für das das Berechnen der Wahrscheinlichkeit einer Kollision zwischen den ersten und den zweiten Mobilstationen;
- Mittel für das Identifizieren der kollidierenden Mobilstation auf der Grundlage der berechneten Kollisionswahrscheinlichkeit.

**11.** Zugangspunkt nach Anspruch 10, weiterhin Mittel für das Freimachen der kollidierenden Mobilstation umfassend.

**12.** Computerprogramm, implementiert in die Prozessoreinheit eines Computers, wobei besagtes Programm Programmbereiche für das Ausführen von Anweisungen umfasst, die den Schritten eines Verfahrens nach einem beliebigen der Ansprüche 1 - 9 entsprechen.

## Revendications

**1.** Procédé de détection d'une première station mobile (D1) provoquant la collision en un point d'accès (10) d'un réseau local sans fil avec une seconde station mobile (D2) pendant une communication entre ledit point d'accès et lesdites première et seconde stations mobiles, ledit procédé comprenant les étapes suivantes :

- identifier ladite première station mobile (D1) sur la base d'un paquet reçu depuis celle-ci ;
- calculer une première fenêtre temporelle (ITW1) dans laquelle un paquet a échoué à être transmis de la première station mobile audit point d'accès ;
- identifier ladite seconde station mobile (D2) sur la base d'un paquet reçu depuis celle-ci ;
- calculer une seconde fenêtre temporelle (ITW2) dans laquelle un paquet a échoué à être transmis de la seconde station mobile audit point d'accès, ou dans laquelle un paquet a réussi à être transmis de ladite seconde station mobile audit point d'accès ;
- si les première et seconde fenêtres temporelles se chevauchent, calculer une probabilité de collision entre les première et seconde stations mobiles ;
- identifier la station mobile en collision sur la base de la probabilité de collision calculée.

**2.** Procédé selon la revendication 1, dans lequel la première fenêtre temporelle (ITW1) dans laquelle un paquet a échoué à être transmis est la fenêtre temporelle entre

- le moment du dernier accusé de réception (ACK) envoyé depuis le point d'accès (10) à la première station mobile plus l'espace inter-trame réparti d'un paquet portant un premier numéro de séquence ; et
- le moment de départ d'un paquet reçu par le point d'accès (10) depuis la première station mobile et portant un second numéro de séquence succédant audit premier numéro de séquence et un indicateur de relance défini sur 1.

**3.** Procédé selon la revendication 2, dans lequel la première fenêtre temporelle (ITW1) est fournie par le paquet reçu par le point d'accès (10) portant un second numéro de séquence succédant audit premier numéro de séquence et un indicateur de relance défini sur 1.

**4.** Procédé selon la revendication 1, dans lequel le paquet transmis au point d'accès est doté du retard de la tentative de transmission précédente, ledit retard de temporisation.

**5.** Procédé selon la revendication 4, dans lequel le retard de temporisation est transmis au point d'accès par l'intermédiaire d'un message en bande ou hors bande.

**6.** Procédé selon l'une quelconque des revendications 2 à 5, dans lequel la probabilité de collision est la probabilité qu'un intervalle temporel, dans la première fenêtre temporelle, de transmission d'un paquet de la première station mobile (D1) au point d'accès, chevauche l'intervalle temporel de transmission d'un paquet de la seconde station mobile au point d'accès (10).

**7.** Procédé selon l'une quelconque des revendications précédentes, dans lequel la station mobile en collision est évincée.

8. Procédé selon la revendication 7, dans lequel la station mobile en collision est évincée par retour de la station mobile en collision au réseau de communication mobile auquel elle était connectée.

9. Procédé selon la revendication 7, dans lequel la station mobile en collision est évincée par absence d'accusés de réception des paquets reçus depuis celle-ci.

10. Point d'accès (10) d'un réseau local sans fil configuré pour détecter une première station mobile (D1) provoquant une collision avec une seconde station mobile (D2) pendant une communication entre ledit point d'accès et lesdites première et seconde stations mobiles, ledit point d'accès comprenant :

- moyens pour identifier ladite première station mobile (D1) sur la base d'un paquet reçu depuis celle-ci ;
- moyens pour calculer une première fenêtre temporelle (ITW1) dans laquelle un paquet a échoué à être transmis de la première station mobile audit point d'accès ;
- moyens pour identifier ladite seconde station mobile (D2) sur la base d'un paquet reçu depuis celle-ci ;
- moyens pour calculer une seconde fenêtre temporelle (ITW2) dans laquelle un paquet a échoué à être transmis de la seconde station mobile audit point d'accès, ou dans laquelle un paquet a réussi à être transmis de ladite seconde station mobile audit point d'accès ;
- si les première et seconde fenêtres temporelles se chevauchent, moyens pour calculer une probabilité de collision entre les première et seconde stations mobiles ;
- moyens pour identifier la station mobile en collision sur la base de la probabilité de collision calculée.

11. Point d'accès selon la revendication 10, comprenant en outre des moyens pour évincer la station mobile en collision.

12. Programme informatique mis en oeuvre sur une unité centrale d'un ordinateur, ledit programme comprenant des sections de code permettant d'exécuter des instructions correspondant aux étapes d'un procédé selon l'une quelconque des revendications 1 à 9.

FG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1509006 A1